# EUROPÄISCHE PATENTSCHRIFT

(11) **EP 0 917 716 B1**
(45) Veröffentlichungstag und Bekanntmachung des Hinweises auf die Patenterteilung: **05.11.2003**
(21) Anmeldenummer: 97935572.4
(22) Anmeldetag: 07.08.1997
(51) Int. Cl.: H01B 1/12, H01M 8/10, H01M 8/02

(54) **PROTONENLEITER MIT EINER TEMPERATURBESTÄNDIGKEIT IN EINEM WEITEN BEREICH UND GUTEN PROTONENLEITFÄHIGKEITEN**
PROTON CONDUCTOR WITH WIDE-RANGING THERMAL RESISTANCE AND GOOD PROTON CONDUCTIVITY
CONDUCTEURS DE PROTONS A LARGE RESISTANCE THERMIQUE ET PRESENTANT DE BONNES PROPRIETES EN TERMES DE CONDUCTION PROTONIQUE

(30) Priorität: 09.08.1996 DE 19632285
(43) Veröffentlichungstag der Anmeldung: 26.05.1999
(73) Patentinhaber: Celanese Ventures GmbH, 65926 Frankfurt am Main (DE)
(72) Erfinder: KREUER, Klaus-Dieter, D-71034 Böblingen (DE); FUCHS, Annette, D-71263 Weil der Stadt (DE); MAIER, Joachim, D-75446 Wiernsheim (DE); FRANK, Georg, D-72074 Tübingen (DE); SOCZKA-GUTH, Thomas, D-65719 Hofheim (DE); CLAUSS, Joachim, D-65929 Frankfurt (DE)
(86) Internationale Anmeldenummer: EP9704305
(87) Internationale Veröffentlichungsnummer: WO98007164

(56) Entgegenhaltungen:
- WO-A-96/13872
- US-A- 5 599 639
- DATABASE INSPEC INSTITUTE OF ELECTRICAL ENGINEERS, STEVENAGE, GB Inspec No. 5478642, WAINRIGHT J S ET AL: "Direct methanol fuel cells using acid doped polybenzimidazole as a polymer electrolyte" XP002046696 & IECEC 96. PROCEEDINGS OF THE 31ST INTERSOCIETY ENERGY CONVERSION ENGINEERING CONFERENCE (CAT. NO.96CH35978), IECEC 96. PROCEEDINGS OF THE 31ST INTERSOCIETY ENERGY CONVERSION ENGINEERING CONFERENCE, WASHINGTON, DC, USA, 11-16 AUG. 1996, ISBN 0-7803-3547-3, 1996, NEW YORK, NY, USA, IEEE, USA, Seiten 1107-1111 vol.2,
- DATABASE WPI Section Ch, Week 9727 Derwent Publications Ltd., London, GB; Class A25, AN 97-292211 XP002046699 & JP 09 087 510 A (NIPPON GOSEI GOMU KK) , 31.März 1997
- DATABASE INSPEC INSTITUTE OF ELECTRICAL ENGINEERS, STEVENAGE, GB Inspec No. 5271460, SAMMS S R ET AL: "Thermal stability of proton conducting acid doped polybenzimidazole in simulated fuel cell environments" XP002046697 & JOURNAL OF THE ELECTROCHEMICAL SOCIETY, APRIL 1996, ELECTROCHEM. SOC, USA, Bd. 143, Nr. 4, ISSN 0013-4651, Seiten 1225-1232,
- DATABASE INSPEC INSTITUTE OF ELECTRICAL ENGINEERS, STEVENAGE, GB Inspec No. 5704382, WANG J -T ET AL: "A H/sub 2//O/sub 2/ fuel cell using acid doped polybenzimidazole as polymer electrolyte" XP002046698 & PROCEEDINGS FO THE FIRST INTERNATIONAL SYMPOSIUM ON PROTON CONDUCTING MEMBRANE FUEL CELLS 1, PROCEEDING OF THE FIRST INTERNATIONAL SYMPOSIUM ON PROTON CONDUCTING MEMBRANE FUEL CELLS 1, CHICAGO, IL, USA, 8 OCT. 1995, 1995, PENNINGTON, NJ, USA, ELECTROCHEM. SOC, USA, Seiten 202-213,

## Beschreibung

Gegenstand dieser Erfindung sind Protonenleiter mit einer Temperaturbeständigkeit in einem weiten Bereich und hohen Leitfähigkeiten sowie deren Verwendung in elektrochemischen Zellen, wie z.B. Brennstoffzellen, Sekundärbatterien und elektrochromen Anzeigen.

Protonenleiter mit einer Temperaturbeständigkeit über 100°C sind aus der Literatur bekannt. Die bekannten Protonenleiter weisen jedoch wesentliche Nachteile auf.

So zeigen protonenleitende Mischungen von Oxo-Säuren oder ihrer Salzen (z.B. Phosphorsäure, Schwefelsäure, Perchlorsäure etc. bzw. deren Salze) und einem aus wasserfreien Substanzen bestehenden Amphoter brauchbare Protonenleitfähigkeiten nur bei Temperaturen um 200 °C (Th. Dippel et al., Solid State Interionics, 1993, 61, 41; K.D. Kreuer et al., Chem. Mater., 1996, 8, 610-41). Das Leistungsgewicht (W/kg) und das Leistungsvolumen (W/I) sind im Vergleich zu Polymerelektrolyt-Membranen (PEM) durch die geringeren Werte für die Protonenleitfähigkeit ungünstig klein. Dadurch sind die Möglichkeiten, insbesonders bei der Verwendung als protonenleitende Membrane für Brennstoffzellen für den mobilen Einsatz, beschränkt.

Ferner bekannt ist die Verwendung von Oxiden, Hydroxiden und Apatiten als Hochtemperatur-Protonenenleiter (Kreuer et al., Chem. Mater.; Vol. 8, No. 3, 1996, p. 615 ff). Relativ gute Protonenleitfähigkeiten können mit diesen Materialien jedoch erst bei Temperaturen oberhalb 500 °C erreicht werden. Im mittleren und Tieftemperaturbereich zeigen sie keine ausreichende Protonenleitfähigkeit. Das Leistungsgewicht und das Leistungsvolumen sind im Vergleich zu PEM noch höher als bei Verwendung von Oxo-Säuren und ihrer Salze (W. Dönitz, "Fuel Cells for Mobile Applications, Status, Requirements and Future Application Potential", Proc. Of The 11th World Hydrogen Conference, Dechema, Stuttgart, 1996, p.1623).
Die bisher bekannten protonenleitenden Polymerelektrolyt-Membranen (PEM) zeigen hohe Protonenleitfähigkeiten in niedrigeren Temperaturbereichen (≤ 100°C) und ermöglichen bei der Verwendung in Brennstoffzellen einen schnellen Leistungsanstieg. So zeigt z.B. eine Dow-Membran, bestehend aus einem perfluorierten Polymer bei Raumtemperatur eine Leitfähigkeit von 0,1-0,2 S/cm (G.A. Eisman, Journ. Of Power Sources, Vol. 29, 1990, 389-398). Das Leistungsvermögen protonenleitender Membrane ist wesentlich vom Ampholytgehalt und dem Säuregehalt der Membran abhängig. Die bekannten PEM verwenden als Ampholyt Wasser. Dies beschränkt die obere Grenze der Betriebstemperatur auf etwa 100 °C. Oberhalb dieser Grenze kommt es zu einer Dehydratisierung der Membran, wodurch das Leistungsvermögen der Membran ( Protonenleitfähigkeit und damit elektrische Leistungsabgabe sowie mechanische Festigkeit) herabgesetzt wird (S. Gottesfeld et al., Polymer Electrolyte Fuel Cell Model, J. Electrochem. Soc., 1994, 141, L46-L50).

Einige der aus dem Stand der Technik bekannten Protonenleiter sind zwar bei hohen Temperaturen einsetzbar (Oxo-Säuren, z.B. Phosphorsäure sowie Hydroxide, Oxide und Apatite), besitzen jedoch ein zu kleines Leistungsgewicht und ein zu kleines Leistungsvolumen. Bei niedrigen Temperaturen zeigen diese Systeme jedoch keine ausreichenden Protonenleitfähigkeiten. Polymerelektrolytmembranen zeigen zwar in Temperaturbereichen unter 100°C gute Protonenleitfähigkeiten, sind aber bei Temperaturen oberhalb 100°C allgemeinen nur wenig stabil.

Es besteht daher die Aufgabe Protonenleiter bereitzustellen, die in einem weiten Temperaturbereich gute Protonenleitfähigkeiten zeigen, eine hohe chemische und elektrochemische und gegebenenfalls mechanische Stabilität aufweisen und gegen den Angriff von Säuren und Basen chemisch beständig sind. Ferner sollten sie ein großes Leistungsvolumen und ein großes Leistungsgewicht aufweisen.

Die Aufgabe wird durch Protonenleiter mit allen Merkmalen des Anspruchs 1 gelöst.
Die vorliegende Erfindung betrifft
Protonenleiter enthaltend 1-99 Gew.%, vorzugsweise 10 bis 90 Gew.%, insbesondere 20 bis 80 Gew.%, einer Säure und 99-1 Gew.%, vorzugsweise 90 bis 10 Gew.%, insbesondere 80 bis 20 Gew.%, eines nicht-wäßrigen Amphoters, die in einem Temperaturbereich bis 400°C, insbesondere -50 bis 300 °C, thermisch stabil sind. Die erfindungsgemäßen Protonenleiter zeigen in diesem Temperaturbereich Protonenleitfähigkeiten von ≥ 10 ⁻⁵ S/cm, insbesondere ≥ 10⁻³ S/cm.

Die in dem erfindungsgemäßen Protonenleiter enthaltene Säure können niedermolekular oder hochmolekular sein. Ebenso können Mischungen aus niedermolekularen und polymeren Säuren bzw. Amphoteren eingesetzt werden.
In einer bevorzugten Ausführungsform enthält die protonenleitende Mischung ein niedermolekulares Amphoter und eine hochmolekulare oder niedermolekulare Säure, die gegebenenfalls in einem hochmolekularen Polymer (als Träger) eingelagert sein kann oder ein niedermolekulares und hochmolekulares Amphoter und eine niedermolekulare Säure.

Unter hochmolekularen Säuren werden insbesondere Säuren mit einem Molekulargewicht > 1000 g/mol, vorzugsweise > 2000 g/mol, verstanden. Die erfindungsgemäß verwendeten polymeren, hochmolekularen Säuren besitzen ionisch dissoziierbare, kovalent gebundene Gruppen, die als Brønstedt-Protonendonoren gegenüber dem Amphoter wirken. Insbesondere verwendet werden Polyarylene, halogenierte aliphatische Polymere oder Copolymere enthaltend aromatische und aliphatische Monomereinheiten, die mit funktionellen Gruppen substituiert sind.
Bevorzugte funktionelle Substituenten sind z.B. -SO₃M, PO₃M_{1 oder 2} oder COOM, wobei M für H, Na, K, Li, NH₄, Ag, Cu, Ca, Mg oder Ba steht.

Beispiele für bevorzugte hochmolekulare Säuren sind z.B. aromatische und aliphatische Polymere, insbesondere perhalogenierte, vorzugsweise perfluorierte, aliphatische Polymere, sowie Polyetherketone, Polyethersulfone, Polyimide, Polyphenylensulfide, Polyphenylenoxide und Copolymere, die Einheiten aus diesen Polymeren enthalten und mit Sulfonsäuregruppen (SO3M), Phosphorsäuregruppen (PO₃M_{1 oder 2}) oder Carbonsäuregruppen (COOM) substiuiert sind.

In einer bevorzugten Ausführungsform liegt die Säure polymer oder an das Amphoter gebunden vor. Auf diese Weise wird ein Entweichen der Säure und somit eine Kontamination der Umgebung mit der korrosiven Säure vermieden.

Die in den erfindungsgemäßen Protonenleitern enthaltenen niedermolekularen Säuren mit einem Molekulargewicht ≤ 1000 g/mol, vorzugsweise ≤ 500 g/mol, besitzen ebenfalls, wie auch die polymeren Säuren, ionisch dissoziierbare, kovalent gebundene Gruppen, die als Bronstedt-Protonendonoren gegenüber dem Amphoter wirken. Bevorzugt werden hier organische aromatische Verbindungen sowie halogenierte aliphatische oder aromatische Verbindungen mit kovalent gebundenen funktionellen Gruppen, wie z.B. -SO₃M, -PO₃M₂, -COOM, -B(OM)₂ oder CF₂SO₃M, wobei M die vorstehend genannte Bedeutung hat, eingesetzt. Insbesondere bevorzugt ist die Verwendung von organischen aliphatischen und aromatischen Sulfonsäuren, z.B. p-Toluolsulfonsäure, Methylsulfonsäure oder Trifluormethylsulfonsäure, sowie von aromatischen und aliphatischen Carbonsäuren.

Weiterhin bevorzugt sind anorganische Mineralsäuren, wie z.B. Schwefelsäure, Phosphorsäure und Perchlorsäure.

Es können niedermolekulare Amphotere oder Mischungen von hochmolekularen und niedermolekularen Amphoteren eingesetzt werden.

Unter hochmolekular werden insbesondere solche Amphotere verstanden, die ein Molekulargewicht > 1000 g/mol, vorzugsweise > 2000 g/mol, besitzen. Bevorzugt werden als Amphotere aliphatische, gegebenenfalls halogenierte, Polymere, die in der Seitenkette amphotere Gruppen aufweisen, und aromatische Polymere, die in der Hauptkette amphotere Strukturen aufweisen, verwendet.
Insbesondere handelt es sich hierbei um Polymere oder Copolymere, die heteroaromatische oder heterocyclische, insbesondere stickstoffenthaltende, Baugruppen in der Haupt- oder Seitenkette besitzen.

Solche Baugruppen sind z.B. 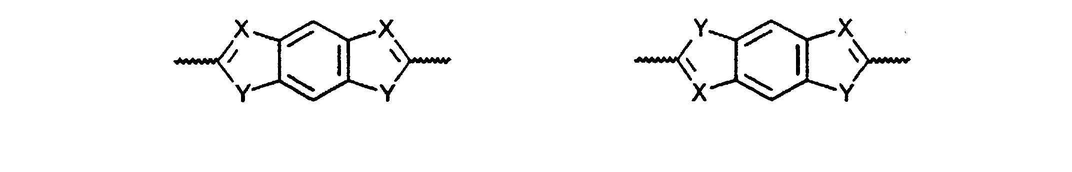 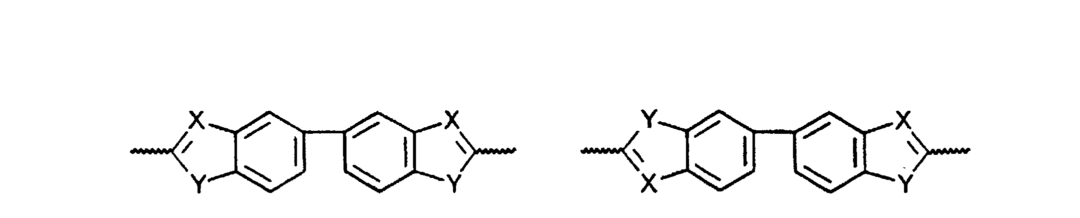 mit X: O, S, NH R: CH₃, C₂H₅, C₆H₅, nC₄H₉, tC₄H₉, C₆H₄-CH₃, CF₃
Y: N, NR'⁺

Bevorzugte amphotere Gruppen sind z.B. Imidazol-, Benzimidazol-, Pyrrazolgruppen Oxazol-, Cabazol-, Indol-, Isoindol-, Dihydrooxazol-, Isooxazol-, Thiazol-, Benzothiazol-, Isothiazol-, Benzoimidazol-, Imidazolidin, Indazol, 4,5-Dihydropyrazol, 1,2,3-Oxadiazol, Furazan, 1,2,3-Thiadiazol, 1,2,4-Thiadiazol, 1,2,3-Triazol, Benzotriazol, 1,2,4-Triazol, Tetrazol, Pyrrol, Pyrrolidin- oder Pyrrazolgruppen sein.
Insbesonders enthält das Amphoter Vinylimidazol-, Imidazol- oder Pyrrazolgruppen.
Beispiele für bevorzugt verwendete hochmolekulare Amphotere sind: Polybenzmidazol, Polybenzoxazole, Polybenzthiazole oder Polyacrylamid

Unter niedermolekularen Amphoteren werden insbesondere solche Amphotere verstanden, die ein Molekulargewicht ≤ 1000g/mol, vorzugsweise ≤ 500 g/mol, besitzen.

Erfindungsgemäß verwendete niedermolekulare Amphotere sind z.B. 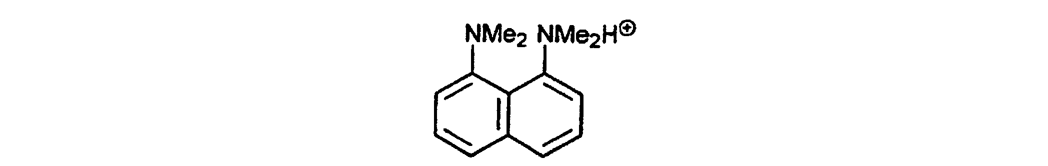 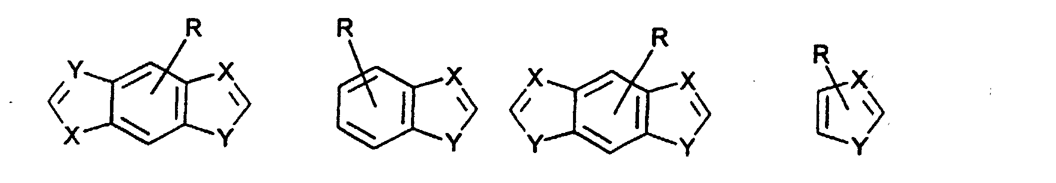 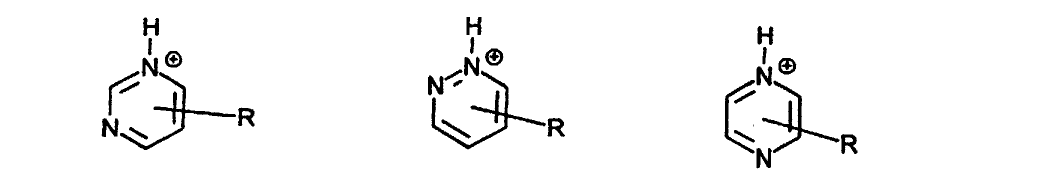 mit X: O, S, NH
Y: N, NR'⁺
R: H, CH₃, C₂H₅, C₆H₅, nC₄H₉, tC₄H₉, CN, NO₂, F, Cl, Br, I, CO₂R', SO₃R' C₆H₄-CH₃, CF₃, C₆H₄-R'
R': H, CH₃, C₂H_{5,} C₆H₅,C₆H₅-CH₃, CF₃, C₄H₉
Me = CH₃

Insbesondere bevorzugt weren niedermolekulare Verbindungen, die als amphotere Gruppen Imidazol-, Pyrrazol- oder Phenylimidazolgruppen aufweisen.

Die erfindungsgemäßen Protonenleiter werden erhalten, indem 1 bis 99 Gew.%, vorzugsweise 10 bis 90 Gew.%, insbesondere 20 bis 80 Gew.%, der entsprechenden Säure mit 99-1 Gew.%, vorzugsweise 90-10 Gew.%, insbesondere 80-20 Gew.% des entsprechenden Amphoters bei Temperaturen im Bereich von -40°C bis 250°C, vorzugsweise 20°C bis 100°C, in einem Lösemittel oder lösemittelfrei zusammengebracht werden.

Als Lösemittel können allgemein solche Lösemittel eingesetzt werden in denen sich die Säure und das Amphoter lösen oder dispergiert werden können. Als Beispiele sind zu nennen:N-Methylpyrrolidon, Dimethylacetamid, Dimethylformamid, Dimethylsulfoxid, Toluol oder Wasser. Das Lösemittel kann bei Bedarf anschliessend, beispielsweise durch verdampfen, entfernt werden.

Die erfindungsgemäßen Protonenleiter können in Form von fließfähigen Zubereitungen, beispielsweise als Lösung in einem entsprechenden Lösemittel oder als Dispersionen, Pasten oder Aerosolen oder ähnlichem, zur Beschichtung von Gegenständen, z.B. Membranen, Folie oder Elektroden verwendet werden.

Ferner ist es möglich ein flächiges Gebilde, beispielsweise eine Membran oder eine Folie, die aus der, vorzugsweise polymeren, Säure besteht mit einer das, insbesondere niedermoleklare, Amphoter enthaltenden Lösung oder Dispersion oder lösemittelfrei, gegebenenfalls in der Schmelze, zu beschichten.
Ebenso ist der umgekehrte Vorgang möglich, indem ein flächiges, das, vorzugsweise polymere Amphoter enthaltendes Gebilde mit der Säure, in Lösung oder Dispersion oder im geschmolzenen Zustand, zusammengebracht und beschichtet wird.

Die auf die beschriebene Weise erhaltenen protonenleitenden Membranen oder Folien besitzen in einem sehr weiten Temperaturbereich, vorzugsweise bei Temperaturen bis +400°C, insbesondere 50 bis 250°C, eine hohe Protonenleitfähigkeit. Die Leitfähigkeiten liegen insbesondere im Bereich von ≥ 10⁻⁵ S/cm, vorzugsweise ≥ 10⁻³ S/cm. Im Unterschied zu den bekannten Polymerelektrolytmembranen zeigen Membranen enthaltend die beschriebenen Protonenleiter eine hohe chemische und elektrochemische Stabilität in den genannten Temperaturbereichen. Ferner zeichnen sich die erfindungsgemäßen Protonenleiter bei Anwendung in einem Brennstoffzellen-Stack durch ein großes Leistungsgewicht, insbesondere > 150 W/kg, vorzugsweise > 190 W/kg, und ein großes Leistungsvolumen, insbesondere > 300 W/I, vorzugsweise > 350 W/I, aus.

Die erfindungsgemäßen Protonenleiter sowie Membranen oder Folien enthaltend die erfindungsgemäßen Protonenleiter eignen sich auf Grund ihrer Temperaturbeständigkeit sowohl bei hohen als auch bei niedrigen Temperaturen, ihrer guten chemischen und physikalischen Stabilität und hohen Protonenleitfähigkeit besonders gut für den Einsatz in elektrochemischen Zellen, insbesondere Brennstoffzellen oder Elektrolyseuren, sowie in sekundären Batterien oder für die Verwendung in elektrochromen Anzeigen.

### Beispiele:

### Imidazol bzw. Benzimidazol/Pyrazol behandelte Membranen aus sulfonierten Polyetherketonen (Hostatec®, Hoechst AG)

Eine 40 µm dicke Membran aus sulfoniertem Hostatec (PEEKK, Sulfonierungsgrad 72,5 %) wird mit festem Pyrazol bzw. Imidazol oder Benzimidazol in innigen Kontakt gebracht. Danach wird die Membran und der Heterocyclus auf Temperaturen von 80-90 °C für das Pyrazol und 100-110 °C für das Imidazol oder Benzimidazol gebracht. Man hält die Mischung 1-2 Stunden bei dieser Temperatur, um eine gleichmäßige Verteilung der Heterocyclen in der Membran zu erreichen. Die Menge des in die Membran eingebrachten Heterocyclus läßt sich direkt durch die Menge des auf die Membran aufgebrachten Heterocyclus kontrollieren. Mit dieser Methode lassen sich Membranen mit einem Heterocyclengehalt von bis zu 200 Gewichtsprozent herstellen.

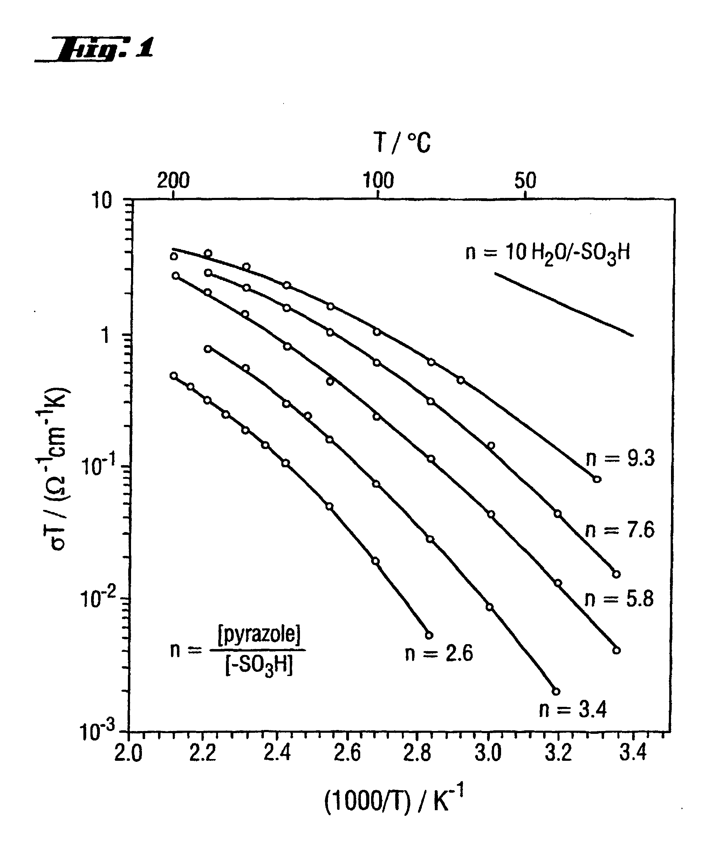

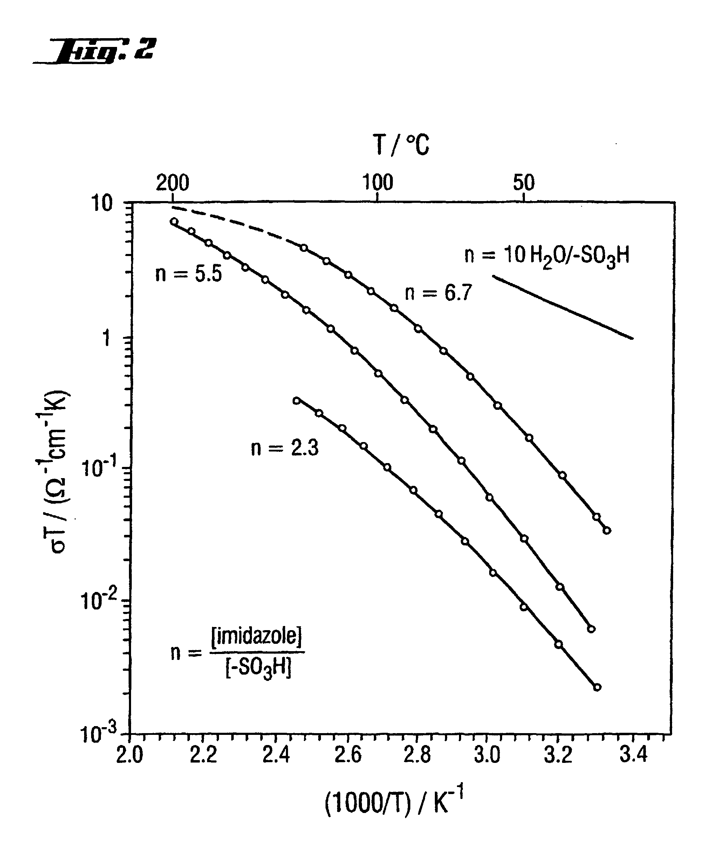

Typische Abhängigkeiten der Protonenleitfähigkeiten von der Temperatur und dem Amphotergehalt zeigen Fig.1 und Fig. 2. Die Werte wurden aus Messungen mit einem Impedanzanalysator gewonnen. Das Elektrodenmaterial bestand aus Gold.

Erreicht werden Leitfähigkeiten von
0,015 S/cm für Imidazol mit n= 5 bei 200°C
0,010 S/cm für Imidazol mit n = 6,7 bei 200 °C
0,016 S/cm für Imidazol mit n = 7 bei 190 °C
0,010 S/cm für Imidazol mit n = 9 bei 130 °C
0,020 S/cm für Pyrazol mit n = 9,3 bei 200 °C.
0,013 S/cm für Benzimidazol mit n = 5 bei 200 °C
n bezeichnet das molare Verhältnis von Heterocyclus zu Sulfonsäuregruppen am Polymer.

Leitfähigkeiten von Mischungen:

### Beispiel 2:

Sulfanilsäure wird mit Imidazol in einem molaren Verhältnis von 10/90 innig vermischt. Die Mischung zeigt eine Leitfähigkeit von 0,054 S/cm bei 150 °C.

### Beispiel 3:

Naphthalinsäure wird mit Benzimidazol in einem molaren Verhältnis von 10/90 vermischt.
Die Mischung zeigt eine Leitfähigkeit von 0,054 S/cm bei 250 °C.

### Beispiel 4:

Antimon-(V)-oxid (mit einer Oberfläche von 320 qm/g) wird mit Benzimidazol in einem molaren Verhältnis von 2:3 innig vermischt.
Es wird eine Leitfähigkeit von 0,005 S/cm bei 170 °C erreicht.

## Patentansprüche

1. Protonenleiter enthaltend eine Säure und ein nicht-wässriges Amphoter, wobei die Säure zu 1 bis 99 Gew. % und das Amphoter zu 99 bis 1 Gew.-% enthalten ist und der Protonenleiter in einem Temperaturbereich bis 400°C thermisch stabil ist und der Protonenleiter eine Protonenleitfähigkeit ≥ 10⁻⁵ S/cm besitzt, **dadurch gekennzeichnet, dass** das Amphoter eine niedermolekulare Verbindung mit einem Molekulargewicht ≤ 1000 g/mol ist, wobei das Amphoter Imidazol-, Vinylimidazol-, Pyrrazol-, Oxazol-, Cabazol-, Indol-, Isoindol-, Dihydrooxazol-, Isooxazol-, Thiazol-, Benzothiazol-, Isothiazol-, Benzimidazol-, Imidazolidin, Indazol, 4,5-Dihydropyrazol, 1,2,3-Oxadiazol, Furazan, 1,2,3-Thiadiazol, 1,2,4-Thiadiazol, 1,2,3Triazol, Benzotriazol, 1,2,4-Triazol, Tetrazol, Pyrrol, Pyrrolidin- oder Pyrrazolgruppen enthält oder eine Verbindung der Formel 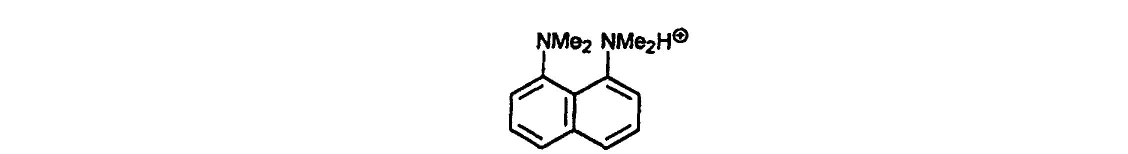 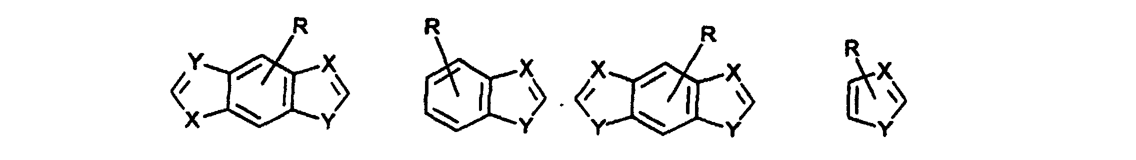 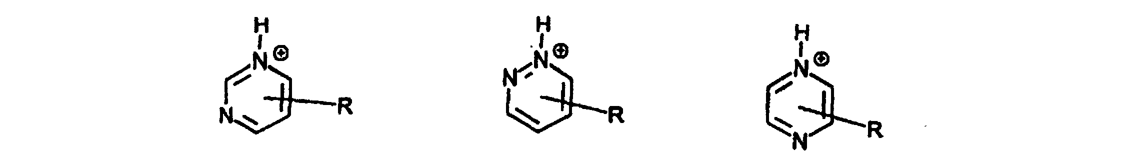 mit X: O, S, NH
Y: N, NR'⁺
R: H, CH₃, C₂H₅, C₆H₅, nC₄H₉, tC₄H₉, CN, NO₂, F, Cl, Br, I, CO₂R', SO₃R' C₆H₄-CH₃, CF₃, C₆H₄-R'
R': H, CH₃, C₂H₅, C₆H₅,C₆H₅-CH₃, CF₃, C₄H₉
Me = CH₃
ist.

2. Protonenleiter nach Anspruch 1, **dadurch gekennzeichnet, dass** der Protonenleiter zusätzlich ein hochmolekulares Amphoter mit einem Molekulargewicht > 1000 g/mol enthält.

3. Protonenleiter nach Anspruch 1 oder 2, **dadurch gekennzeichnet, dass** der Protonenleiter eine niedermolekulare und/oder polymere Säure enthält.

4. Protonenleiter nach mindestens einem der Ansprüche 1 bis 3, **dadurch gekennzeichnet, dass** die Säure ionisch dissoziierbare, kovalent gebundene Gruppen aufweist, die als Brønstedt-Protonendonoren gegenüber dem Amphoter wirken.

5. Protonenleiter nach mindestens einem der Ansprüche 1 bis 4, **dadurch gekennzeichnet, dass** die hochmolekulare Säure ein Polyarylen oder ein gegebenenfalls halogeniertes, aliphatisches Polymer oder ein Copolymer, enthaltend aromatische und aliphatische Monomereinheiten, ist, welches mit funktionellen Gruppen substituiert ist.

6. Protonenleiter nach mindestens einem der Ansprüche 1 bis 5, **dadurch gekennzeichnet, dass** die niedermolekulare Säure eine aromatische oder aliphatische Verbindung mit kovalent gebundenen funktionellen Gruppen oder eine anorganische Mineralsäure ist.

7. Protonenleiter nach mindestens Anspruch 6 oder 7, **dadurch gekennzeichnet, dass** die Säure als funktionelle Substituenten -B(OM)₂, SO₃M, -PO₃M_{1 oder 2}, -COOM oder CF₃-SO₃M-Gruppen, wobei M für H, Na, K , Li, Ag, Cu, Ca, Mg oder Ba steht, enthält.

8. Protonenleiter nach mindestens einem der Ansprüche 2 bis 7, **dadurch gekennzeichnet, dass** das hochmolekulare Amphoter ein aromatisches oder aliphatisches, gegebenenfalls halogeniertes Polymer ist.

9. Protonenleiter nach Anspruch 8, **dadurch gekennzeichnet, dass** das hochmolekulare Amphoter Imidazol-, Vinylimidazol-, Pyrrazol-, Oxazol-, Cabazol-, Indol-, Isoindol-, Dihydrooxazol-, Isooxazol-, Thiazol-, Benzothiazol-, Isothiazol-, Benzimidazol-, Imidazolidin, Indazol, 4,5-Dihydropyrazol, 1,2,3-Oxadiazol, Furazan, 1,2,3-Thiadiazol, 1,2,4-Thiadiazol, 1,2,3Triazol, Benzotriazol, 1,2,4-Triazol, Tetrazol, Pyrrol, Pyrrolidin- oder Pyrrazolgruppen enthält.

10. Protonenleiter nach mindestens einem der Ansprüche 1 bis 9 zum Beschichten von flächigen Gebilden, insbesondere Membranen, Folien und Elektroden.

11. Verfahren zur Herstellung eines Protonenleiters nach Anspruch 1, **dadurch gekennzeichnet, dass** die Säure und das Amphoter bei Temperaturen von -40°C bis 250°C in einem Lösemittel oder gegebenenfalls lösemittelfrei miteinander in Kontakt gebracht werden.

12. Membran enthaltend einen Protonenleiter nach mindestens einem der Ansprüche 1 bis 10 mit einer Temperaturbeständigkeit bis zu 400°C.

13. Verfahren zur Herstellung einer Membran nach Anspruch 12, **dadurch gekennzeichnet, daß** eine Membran, die aus der entsprechenden Säure besteht mit einer das Amphoter enthaltenden Lösung oder Dispersion oder lösemittelfrei, gegebenenfalls in der Schmelze, beschichtet wird.

14. Verfahren zur Herstellung einer Membran nach Anspruch 12, **dadurch gekennzeichnet, daß** eine Membran, die aus dem entsprechenden Amphoter besteht mit einer die Säure enthaltenden Lösung oder Dispersion oder lösemittelfrei, gegebenenfalls in der Schmelze, beschichtet wird.

15. Verwendung der Membran nach Anspruch 12 in elektrochemischen Zellen, Sekundärbatterien oder elektrochromen Anzeigen.

## Claims

1. A proton conductor comprising an acid and a nonaqueous amphoteric material, wherein the acid is present in an amount of from 1 to 99% by weight and the amphoteric material is present in an amount of from 99 to 1% by weight, and the proton conductor is thermally stable in a temperature range up to 400°C and has a proton conductivity of ≥ 10⁻⁵ S/cm, **characterized in that** the amphoteric material is a low molecular weight compound having a molecular weight of ≤ 1000 g/mol, the amphoteric material comprising imidazole, vinylimidazole, pyrazole, oxazole, carbazole, indole, isoindole, dihydrooxazole, isooxazole, thiazole, benzothiazole, isothiazole, benzimidazole, imidazolidine, indazole, 4,5-dihydropyrazole, 1,2,3-oxadiazole, furazane, 1,2,3-thiadiazole, 1,2,4-thiadiazole, 1,2,3-triazole, benzotriazole, 1,2,4-triazole, tetrazole, pyrrole, pyrrolidine or pyrazole groups, or a compound of the formula 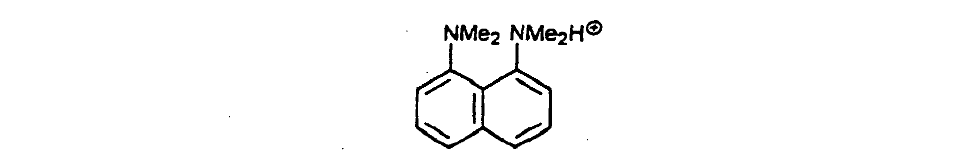 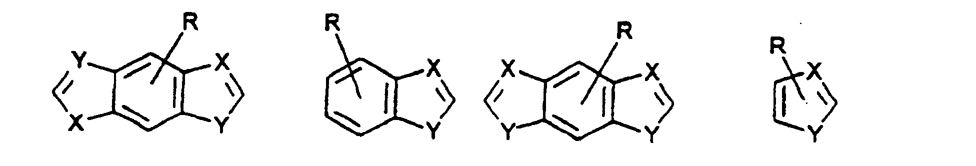 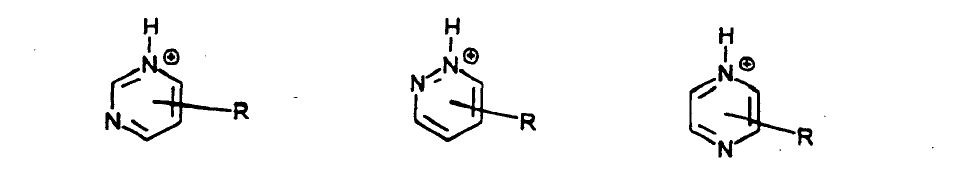 where
X: O, S, NH
Y: N, NR'⁺
R: H, CH₃, C₂H₅, C₆H₅, nC₄H₉, tC₄H₉, CN, NO₂, F, Cl, Br, I, CO₂R', SO₃R' C₆H₄-CH₃, CF₃, C₆H₄-R'
R': H, CH₃, C₂H₅, C₆H₅, C₆H₅-CH₃, CF₃, C₄H₉
Me = CH₃.

2. A proton conductor as claimed in claim 1, **characterized in that** it additionally comprises a high molecular weight amphoteric material having a molecular weight of > 1000 g/mol.

3. A proton conductor as claimed in claim 1 or 2 which comprises a low molecular weight and/or polymeric acid.

4. A proton conductor as claimed in at least one of claims 1 to 3, **characterised in that** the acid has ionically dissociable, covalently bound groups which act as Brønsted proton donors toward the amphoteric material.

5. A proton conductor as claimed in at least one of claims 1 to 4, **characterised in that** the high molecular weight acid is a functionalized polyarylene or halogenated or unhalogenated aliphatic polymer or a functionalized copolymer comprising aromatic and aliphatic monomer units.

6. A proton conductor as claimed in at least one of claims 1 to 5, **characterised in that** the low molecular weight acid is an aromatic or aliphatic compound containing covalently bound functional groups or an inorganic mineral acid.

7. A proton conductor as claimed in either claim 6 or 7, **characterised in that** the functional substituents present in the acid are -B(OM)₂, -SO₃M, -PO₃M_{1 or 2}, -COOM, or -CF₂-SO₃M groups, where M is H, Na, K, Li, Ag, Cu, Ca, Mg or Ba.

8. A proton conductor as claimed in at least one of claims 2 to 7, **characterised in that** the high molecular weight amphoteric material is an aromatic or aliphatic, halogenated or unhalogenated polymer.

9. A proton conductor as claimed in claim87, **characterised in that** the high molecular weight amphoteric material contains imidazole, vinylimidazole, pyrazole, oxazole, carbazole, indole, isoindole, dihydrooxazole, isooxazole, thiazole, benzothiazole, isothiazole, benzimidazole, imidazolidine, indazole, 4,5-dihydropyrazole, 1,2,3-oxadiazole, furazane, 1,2,3-thiadiazole, 1,2,4-thiadiazole, 1,2,3-triazole, benzotriazole, 1,2,4-triazole, tetrazole, pyrrole, pyrrolidine or pyrazole groups.

10. A proton conductor as claimed in at least one of claims 1 to 9 for coating sheet-like structures, in particular membranes, films and electrodes.

11. A process for preparing a proton conductor as claimed in claim 1, **characterized in that** it comprises bringing the acid and the amphoteric material into contact with one another at temperatures of from -40°C to 250°C in a solvent or, if desired, in the absence of solvent.

12. A membrane comprising a proton conductor as claimed in at least one of claims 1 to 10 which is thermally stable up to 400°C.

13. A process for preparing a membrane as claimed in claim 12, which comprises coating a membrane comprising the appropriate acid with a solution or dispersion comprising the amphoteric material or carrying out the coating process in the absence of solvent, if desired in the melt.

14. A process for preparing a membrane as claimed in claim 12, **characterized in that** it comprises coating a membrane comprising the appropriate amphoteric material with a solution or dispersion comprising the acid or carrying out the coating process in the absence of solvent, if desired in the melt.

15. The use of a membrane as claimed in claim 12 in electrochemical cells, secondary batteries or electrochromic displays.

## Revendications

1. Conducteur protonique contenant un acide et un amphotère non aqueux, qui contient de 1 à 99 % en poids d'acide et de 99 à 1 % en poids d'amphotère et le conducteur protonique est thermiquement stable dans une gamme de température allant jusqu'à 400 °C et le conducteur protonique possède une conductivité protonique ≥ 10⁻⁵ S/cm, **caractérisé en ce que** l'amphotère est un composé de faible masse moléculaire avec une masse moléculaire ≤ 1000 g/mol, dans lequel l'amphotère contient des groupes imidazole, vinylimidazole, pyrrazole, oxazole, carbazole, indole, iso-indole, dihydro-oxazole, iso-oxazole, thiazole, benzothiazole, isothiazole, benzimidazole, imidazolidine, indazole, 4,5-dihydropyrazole, 1,2,3-oxadiazole, furazane, 1,2,3-thiadiazole, 1,2,4-thiadiazole, 1,2,3-triazole, benzotriazole, 1,2,4-triazole, tétrazole, pyrrole, pyrrolidine ou pyrrazole ou un composé de formule 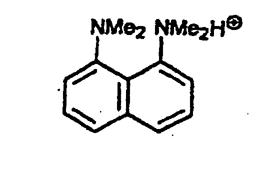 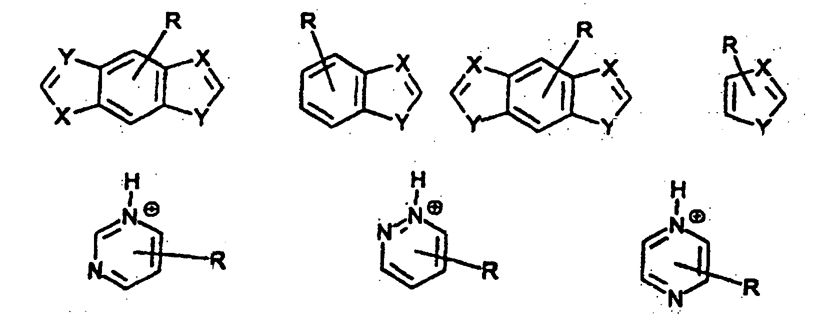 avec
X : O, S, NH
Y : N, NR'⁺
R : H, CH₃, C₂H₅, C₆H₅, nC₄H₉, tC₄H₉, CN, NO₂, F, Cl, Br, I, CO₂R', SO₃R', C₆H₄-CH₃, CF₃, C₆H₄-R'
R' : H, CH₃, C₂H₅, C₆H₅, C₆H₅-CH₃, CF₃, C₄H₉
Me = CH₃.

2. Conducteur protonique selon la revendication 1, **caractérisé en ce que** le conducteur protonique contient additionnellement un amphotère de masse moléculaire élevée avec une masse moléculaire > 1000 g/mol.

3. Conducteur protonique selon la revendication 1 ou 2, **caractérisé en ce que** le conducteur protonique contient un acide de faible masse moléculaire et/ou polymère.

4. Conducteur protonique selon au moins une des revendications 1 à 3, **caractérisé en ce que** l'acide présente des groupes ioniquement dissociables, liés par covalence, qui agissent comme donneurs de protons de Brönstedt vis à vis de l'amphotère.

5. Conducteur protonique selon au moins une des revendications 1 à 4, **caractérisé en ce que** l'acide de masse moléculaire élevée est un polyarylène ou un polymère ou un copolymère aliphatique éventuellement halogéné contenant des motifs monomère aromatiques et aliphatiques, qui est substitué par des groupes fonctionnels.

6. Conducteur protonique selon au moins une des revendications 1 à 5, **caractérisé en ce que** l'acide de faible masse moléculaire est un composé aromatique ou aliphatique avec des groupes fonctionnels liés par covalence ou un acide minéral inorganique.

7. Conducteur protonique selon au moins une des revendications 6 ou 7, **caractérisé en ce que** l'acide contient comme substituants fonctionnels les groupes -B(OM)₂, -SO₃M, -PO₃M_{1 ou 2}, -COOM ou CF₃-SO₃M, dans lesquels M représente H, Na, K, Li, Ag, Cu, Ca, Mg ou Ba.

8. Conducteur protonique selon au moins une des revendications 2 à 7, **caractérisé en ce que** l'amphotère de masse moléculaire élevée est un polymère aromatique ou aliphatique, éventuellement halogéné.

9. Conducteur protonique selon la revendication 8, **caractérisé en ce que** l'amphotère de masse moléculaire élevée contient des groupes imidazole, vinylimidazole, pyrrazole, oxazole, carbazole, indole, iso-indole, dihydro-oxazole, iso-oxazole, thiazole, benzothiazole, isothiazole, benzimidazole, imidazolidine, indazole, 4,5-dihydropyrazole, 1,2,3-oxadiazole, furazane, 1,2,3-thiadiazole, 1,2,4-thiadiazole, 1,2,3-triazole, benzotriazole, 1,2,4-triazole, tétrazole, pyrrole, pyrrolidine ou pyrrazole.

10. Conducteur protonique selon au moins une des revendications 1 à 9 pour le revêtement d'objets plats, en particulier de membranes, de feuilles et d'électrodes.

11. Procédé pour la fabrication d'un conducteur protonique selon la revendication 1, **caractérisé en ce qu'**on met en contact l'un avec l'autre l'acide et l'amphotère à des températures de -40 °C à 250 °C dans un solvant ou éventuellement sans solvant.

12. Membrane contenant un conducteur protonique selon au moins une des revendications 1 à 10 avec une résistance à la température jusqu'à 400 °C.

13. Procédé pour la fabrication d'une membrane selon la revendication 12, **caractérisé en ce qu'**on recouvre une membrane qui est constituée de l'acide correspondant avec une solution ou une dispersion contenant l'amphotère ou sans solvant, éventuellement à l'état fondu.

14. Procédé pour la fabrication d'une membrane selon la revendication 12, **caractérisé en ce qu'**on recouvre une membrane qui est constituée de l'amphotère correspondant avec une solution ou une dispersion contenant l'acide ou sans solvant, éventuellement à l'état fondu.

15. Utilisation de la membrane selon la revendication 12 dans des cellules électrochimiques, des batteries secondaires ou des dispositifs électrochromes.
